# EUROPÄISCHE PATENTSCHRIFT

(11) **EP 1 622 737 B1**
(45) Veröffentlichungstag und Bekanntmachung des Hinweises auf die Patenterteilung: **10.12.2008**
(21) Anmeldenummer: 04731850.6
(22) Anmeldetag: 10.05.2004
(51) Int. Cl.: B23K 9/28, B23K 9/32, B23K 35/22, C23C 22/52, D01F 1/10, F23D 14/50, B24D 13/02, A46B 13/00, B23K 5/22, A46B 1/00

(54) **Verfahren zur Erzeugung einer künstlichen Patinaoxid-Schicht auf unterschiedlchen Teilen eines Schweissbrenners**
Process for coating different parts of a welding torch with an artificial Patina-oxide layer
Procédé de revêtement de differentes pièces d'une torche de soudage avec une couche d'oxydation de patine artificielle

(30) Priorität: 13.05.2003 AT 7302003
(43) Veröffentlichungstag der Anmeldung: 08.02.2006
(73) Patentinhaber: Fronius International GmbH, 4643 Pettenbach (AT)
(72) Erfinder: BINDER, Georg, A-4643 Pettenbach (AT); HUBINGER, Manfred, A-4550 Kremsmuenster (AT); LANGEDER, Harald, A-4643 Pettenbach (AT); RAXENDORFER, Josef, A-4652 Steinerkirchen (AT)
(74) Vertreter: Sonn & Partner Patentanwälte
(86) Internationale Anmeldenummer: PCT/AT2004/000160
(87) Internationale Veröffentlichungsnummer: WO 2004/101208

(56) Entgegenhaltungen:
- WO-A-99/33602
- DE-A- 1 521 918
- DE-A- 3 339 547
- DE-A- 19 507 472
- US-A- 3 497 401
- US-A- 4 367 389
- US-A- 4 945 687
- US-A- 5 618 456
- US-A- 5 714 052
- US-A- 5 903 951
- US-A- 5 983 434
- US-B1- 6 413 287
- PATENT ABSTRACTS OF JAPAN Bd. 0081, Nr. 80 (M-318), 18. August 1984 (1984-08-18) & JP 59 073186 A (HITACHI SEISAKUSHO KK), 25. April 1984 (1984-04-25)

## Beschreibung

Die Erfindung betrifft ein Verfahren zur Erzeugung einer künstlichen Patinaoxid-Schicht auf einer Gasdüse und/oder den Düsenstock und/oder dem Kontaktrohr eines Schweißbrenners, wobei diese Teile aus Kupfer bzw. einer Kupferlegierung bestehen (siehe z.B. US-A-5 618 456).

Schweißbrenner werden während des Schweißvorganges durch Spritzer geschmolzenen Metalls verunreinigt. Dabei lagern sich die Metallspritzer außen am Gehäuse der Gasdüse des Schweißbrenners und auch innerhalb der Gasdüse ab und erstarren dort. In der Folge wird die Strömung des Schutzgases durch die Gasdüse durch die abgelagerten Metallspritzer gestört, so dass auch atmosphärische Luft an die Schweißstelle gelangt und somit den Schweißprozess negativ beeinflusst. Weiters kann es dazu führen, dass durch die Schweißspritzer Kurzschlüsse entstehen können. Für eine qualitativ hochwertige Schweißstelle ist daher ein einwandfrei funktionierender und möglichst sauberer Schweißbrenner wichtig. Schweißbrenner werden daher in regelmäßigen Abständen von den darauf befindlichen Spritzern gereinigt. Während der Reinigungszeit steht der Schweißbrenner für Schweißarbeiten nicht zur Verfügung. Daher wird angestrebt, die Reinigung möglichst rasch durchzuführen.

Beispielsweise ist aus der DE 44 26 303 C1 ein Antihaftmittel gegen Schweißspritzer bekannt, das aus einer Lösung eines Glycerinesters einer ungesättigten C18-C20-Fettsäure in einem Methyl- oder Ethylester einer solchen Fettsäure besteht. Dieses Antihaftmittel wird auf jene Teile eines Schweißbrenners aufgetragen, wo das Anhaften der Schweißspritzer verhindert werden soll.

Weiters ist es, gemäß DE 195 07 472 C2, möglich, dass eine Beschichtung auf der Gas- oder Stromdüse einer Schutzgasschweißanlage aufgebracht wird, wobei die Gas- oder Stromdüse aus einem Metall, das mit einer Schutzschicht beschichtet ist, die Graphit und ein unter Hitzeeinwirkung Kohlenstoff freisetzendes Polymer und/oder ein hitzebeständiges Polymer enthält, ausgebildet ist.

Ein Schweißbrenner und eine Stromdüse bzw. Kontaktrohr ist aus der DE 201 00 126 U1 bekannt, bei der eine spezielle Beschichtung aufgebracht wird. Der Schweißbrenner weist einen innenliegenden Düsenstock, an dessen zum Schweißbereich weisenden Endabschnitt eine hohle Stromdüse angebracht ist, auf, wobei auf zumindest einem Teil der Oberfläche der Stromdüse eine metallische Antihaft- und Reflexions-Beschichtung vorgesehen ist. Die Beschichtung weist Silber als Hauptbestandteil auf.

Die US 5 618 456 A beschreibt ein Verfahren zur Verbesserung der Oberflächeneigenschaften des Endstücks und der Düse eines Schweißbrenners um die Spritzerhaftigkeit zu reduzieren. Dies wird durch die Erzeugung einer künstlichen Patinaoxid-Schicht auf dem Endstück und der Düse erzielt.

Die US 5 714 052 A zeigt ebenfalls ein Verfahren zur Herstellung einer künstlichen Patinaoxid-Schicht unter Verwendung eines bestimmten Elektrolysebads.

Die US 3 497 401 A beschreibt ebenfalls ein Verfahren zur Herstellung einer künstlichen Patinaoxid-Schicht auf Teilen aus Kupfer oder einer Kupferlegierung unter Verwendung speziell zusammengesetzter Lösungen.

Zum Reinigen des Schweißbrenners, insbesondere der Gasdüse, dem Kontaktrohr und dem Düsenstock, existieren unterschiedliche mechanische Verfahren. Dabei werden beispielsweise mit Hilfe von Metallbürsten, Messern oder dergl. die Ablagerungen, also die Schweißspritzer, am Schweißbrenner entfernt. Bei der mechanischen Reinigung werden die Bestandteile des Schweißbrenners durch die mechanischen Einwirkungen beschädigt und in der Folge deren Lebensdauer verkürzt.

Aus der EP 0 765 204 B ist eine Vorrichtung zum Reinigen von Köpfen bzw. Gasdüsen von Schweißbrennern bekannt, bei der die Vorrichtung ein offenes Gefäß aufweist, mit dem ein Ultraschall-Generator verbunden ist, wobei der Ultraschall-Generator in einer Flüssigkeit eine Ultraschallwelle erzeugt. Weiters ist im Gefäß ein drehbares Werkzeug angeordnet. Dabei kann das Werkzeug durch eine Stahldrahtbürste bzw. eine Metallbürste gebildet sein, bei der die Borsten der Bürste aus Stahl bestehen. Die Verwendung der Bürste setzt allerdings voraus, dass der Ring bzw. die Spritzer vom Gehäuse durch die Ultraschall-Vibrationen, also den Ultraschallwellen, gelöst wird, so dass beim Bürsten der Ring bzw. die Spritzer vom Gehäuse abfallen.

Weiters ist aus der DE 33 39 547 C eine Vorrichtung zum Reinigen einer Gasdüse eines Schweißbrenners bekannt, bei der die äußere Form der Bürste an die Form der zu reinigenden Innenfläche der Gasdüse angepasst ist. Dabei besteht die Bürste aus einem auf einem zylindrischen Schaft angeordneten Borstenstreifen, wobei der zylindrische Schaft einen konzentrischen Ansatz mit verringertem Außendurchmesser aufweist, der in die zur Befestigung der Gasdüse am Schweißbrenner dienende Bohrung passt. Weiters weist der Schaft einen Handstiel auf, so dass manuell von einem Benutzer aus, die Vorrichtung in die Gasdüse eingeführt werden kann und der Benutzer die Gasdüse bzw. den Schweißbrenner reinigen kann.

Grundsätzlich ist zu erwähnen, dass noch eine Vielzahl weiterer Vorrichtungen zum Reinigen von Gasdüsen eines Schweißbrenners bekannt sind, bei denen die Reinigung mit Mahlwerkzeugen, wie beispielsweise Fräswerkzeugen oder Schneidwerkzeugen, erfolgt. Hierbei wird das Werkzeug in die Gasdüse eingeführt und es werden die Spritzer durch das Werkzeug, also einem Fräser oder einem Schneidelement von der Gasdüse geschält.

Nachteilig ist bei den aus dem Stand der Technik bekannten Systemen, dass bei derartigen mechanischen Reinigungsvorrichtungen nur dann eine erfolgreiche Reinigung der Gasdüse durchgeführt werden kann, wenn die Spritzer aus festem Material, insbesondere aus Stahl oder einer Stahllegierung bestehen, d.h., dass ein Schweißprozess zum Verbinden von Werkstücken aus Stahl oder einer Stahllegierung durchgeführt wird, wodurch die Spritzer aus diesen Materialien bestehen. Ansonst ist eine Anwendung mit den üblichen aus dem Stand der Technik bekannten Werkzeugen, nämlich einem Fräswerkzeug, einem Schneidwerkzeug oder mit Metallbürsten, nicht möglich, da bei Schweißprozessen mit weichen Materialien, wie beispielsweise Aluminium, die aus Aluminium entstehenden Spritzer, nicht einfach von der Gasdüse entfernt bzw. geschält werden können. Hier tritt nämlich der Effekt ein, dass die aus Aluminium bestehenden Spritzer sich nicht einfach im Ganzen von der Gasdüse lösen, sondern durch das Werkzeug regelrecht verrieben bzw. verschmiert werden, wodurch die Reinigungsqualität mit den bekannten Werkzeugen sehr zu wünschen übrig lässt.

Die Aufgabe der vorliegenden Erfindung besteht darin, die Spritzerhaftigkeit bei Schweißbrennern zu reduzieren.

Gelöst wird die erfindungsgemäße Aufgabe dadurch, dass der mit der Patinaoxid-Schicht zu versehende Teil der Gasdüse und/oder des Düsenstocks und/oder des Kontaktrohres in eine erste aus Wasser und 2ml je Liter Wasser Schwefelleber bestehende Lösung eingetaucht wird und nach einer Spülung in eine zweite aus Wasser, 1-2g je Liter Wasser Kupfersulfat und 10ml je Liter Wasser Schwefelsäure bestehende Lösung eingetaucht wird.

Von allen Oberflächenbeschichtungsmethoden ist die Generierung einer Oxidschicht aus dem Grundwerkstoff (Patina-Schicht) jene Schicht mit den besten Haftungseigenschaften, da die Schicht nicht auf die Oberfläche aufgetragen wird, sondern durch das chemische Verfahren stufenweise, bereits auf molekularer Ebene, an den Korngrenzen des Gefüges aus dem Grundwerkstoff entsteht.

Vorteilhaft ist hierbei, dass die künstlich erzeugte Patina-Schicht bei einer aus Kupfer bestehenden Gasdüse bzw. bei den Kupferteilen eines Schweißbrenners eine Schicht ist, welche sich durch das Vorhandensein von (OH)-Gruppen auszeichnet. Diese Sauerstoffverbindung bewirkt eine hohe Oberflächenspannung, eine höhere Temperaturbeständigkeit und eine herabgesetzte Benetzungseigenschaft. Weiters wird durch diesen Oxidationsfilm auf der Kupferoberfläche das Eindringen von Aluminiumschmelze in die Oberflächenporen und dadurch das Anhaften verhindert. Durch diesen Effekt wird auch das Reinigen der Teile wesentlich vereinfacht, da sich die Schweißspritzer sehr leicht von der Patina-Schicht lösen. Somit kommt es beim Reinigen der Teile kaum zu Oberflächenzerstörungen, wodurch die Lebensdauer der Teile sehr erhöht wird. Ein wesentlicher Vorteil liegt vor allem darin, dass bei einem Einsatz der Teile mit der Patina-Schicht in einem Aluminium-Schweißprozess eine sehr niedrige Spritzerhaftung erreicht wird, da das Aluminium mit der Patina-Schicht keine Verbindung eingeht und somit die Schweißspritzer nur sehr schwer anhaften.

Vorteilhafterweise wird die gesamte Gasdüse und/oder der gesamte Düsenstock und/oder das gesamte Kontaktrohr in die Lösungen eingetaucht.

Bevorzugterweise wird der mit der Patinaoxid-Schicht zu versehende Teil der Gasdüse und/oder des Düsenstocks und/oder des Kontaktrohres für einige Sekunden in die erste Lösung eingetaucht.

Nach der Spülung wird der mit der Patinaoxid-Schicht zu versehende Teil vorzugsweise so oft in die zweite Lösung eingetaucht, bis die Dicke der Patinaoxid-Schicht 50 bis 200µm beträgt.

Dies wird bei einem zwei- bis dreifachen Eintauchen in die zweite Lösung erzielt.

Die vorliegende Erfindung wird anhand der beigefügten Zeichnung näher erläutert, welche einen Teilausschnitt eines Schweißbrenners geschnitten und in vereinfachter, schematischer Darstellung zeigt.

In der Figur ist ein Ausschnitt, insbesondere ein dem Schweißprozess zugeordneter Endbereich eines Schweißbrenners 1 gezeigt. Der Schweißbrenner 1 weist eine Gasdüse 2, einen Düsenstock 3 und ein Kontaktrohr 4 auf. Die weiteren Teile des Schweißbrenners 1 wurden der Übersicht halber nicht dargestellt. Auch ist der Aufbau bzw. die Ausbildung der dargestellten Teile nicht auf das gezeigte Ausführungsbeispiel beschränkt, sondern ist es möglich, dass die erfindungsgemäße Lösung auf jeden beliebigen aus dem Stand der Technik bekannten Schweißbrenner 1 bzw. dessen Teile anwendbar ist.

Die Gasdüse 2 besteht aus Kupfer oder einer Kupferlegierung und wird auf den Schweißbrenner 1 lösbar angebracht. Das Kontaktrohr 4 sowie der Düsenstock 3, die in jedem Schweißbrenner 1 in den unterschiedlichsten Ausführungen vorhanden sind, bestehen ebenfalls aus Kupfer bzw. einer Kupferlegierung, wobei das Kontaktrohr 4 lösbar mit dem Düsenstock 3 verbunden ist. Auf eine Beschreibung der Funktionsweise bzw. der Aufgabe dieser Teile wird verzichtet, da diese hinlänglich aus dem Stand der Technik bekannt ist.

Wie bereits einleitend erwähnt, entstehen bei einem Schweißprozess Schweißspritzer 5, wie schematisch angedeutet, die sich an der Gasdüse 2, dem Kontaktrohr 4 und dem Düsenstock 3 ablagern bzw. an diesen Teilen haftend bleiben. Bei längeren Schweißprozessen kann es somit passieren, dass der Schweißbrenner 1 mit derartigen Schweißspritzern 5 ganz oder teilweise verschlossen wird und somit der Gasstrom unregelmäßig wird bzw. ganz unterbrochen wird und es können auch Kurzschlüsse zwischen den einzelnen Teilen gebildet werden. Da bei herkömmlichen aus Kupfer bestehenden Gasdüsen 2 bzw. bei den Kupferteilen eines Schweißbrenners 1 sich die Schweißspritzer 5 in die Oberfläche einbrennen bzw. sich an diese anschmelzen, ist es oftmals schwierig diese Teile zu reinigen, da diese sehr fest anhaften und das Ablösen der Schweißspritzer 5 sehr schwierig ist.

Wird dann noch dazu der Schweißbrenner 1 bei einer Aluminium-Schweißung eingesetzt, so gestaltet sich das Reinigen der Kupferteile, insbesondere des Düsenstockes 3 und des Kontaktrohres 4, bzw. der Gasdüse 2 noch wesentlich schwieriger, da die Aluminium-Schweißspritzer beim Reinigen nicht einfach abgesprengt bzw. abgeschält werden können. Die Aluminium-Schweißspritzer 5 haben die Eigenschaft, dass sie sich beim Reinigen nicht einfach als Ganzes ablösen, sondern aufgrund der Weichheit des Materials diese sozusagen verschmiert bzw. verrieben werden, d.h., dass die Aluminium-Schweißspritzer 5 beim Reinigen mit den bekannten Reinigungsvorrichtungen, wie beispielsweise Fräsvorrichtungen oder Bürstenvorrichtungen mit Stahlborsten, nicht als Ganzes entfernt werden können, sondern die Schweißspritzer 5 werden über die Reinigungsvorrichtungen abgeschält und verschmieren bzw. verreiben sich dadurch.

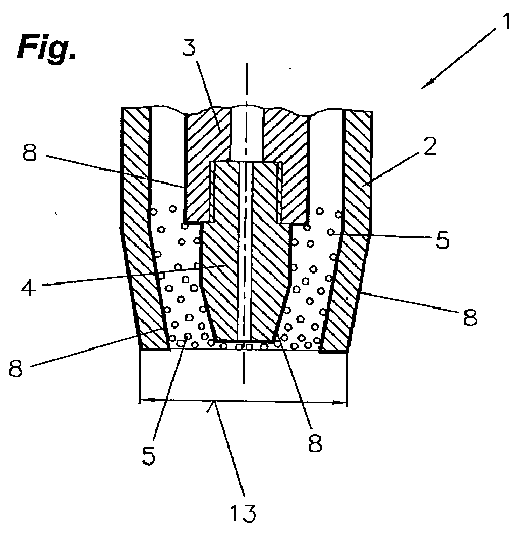

Speziell bei Roboteranwendungen wird eine automatisierte Reinigung des Schweißbrenners 1 vorgenommen, so dass sicher gestellt werden muss, dass die Schweißspritzer 5 möglichst vollständig entfernt werden. Hierzu ist in den Fig. 2 bis 4 ein spezielles Werkzeug 6, insbesondere eine Bürste 7, zum Reinigen des Schweißbrenners 1 näher beschrieben, wobei sich diese Reinigungsvorrichtung speziell bei Aluminium-Schweißungen in Verbindung mit der erfindungsgemäßen Ausbildung der Gasdüse 2 bzw. dem Schweißbrenner 1, insbesondere des Düsenstockes 3 und dem Kontaktrohr 4, sehr gut eignet.

Bei der erfindungsgemäßen Lösung ist nunmehr vorgesehen, dass jene Teile des Schweißbrenners 1, die aus Kupfer oder einer Kupferlegierung bestehen, speziell behandelt werden, so dass das Haftenbleiben der Schweißspritzer 5 reduziert wird, d.h., dass die Spritzerhaftung stark reduziert wird. Hierzu werden die Teile, insbesondere die Gasdüse 2, das Kontaktrohr 4 und der Düsenstock 3, mit einer künstlich erzeugten Patina-Schicht 8 versehen.

Grundsätzlich bildet sich eine Patina-Schicht 8 durch Oxidation, wenn man Kupfer über einen langen Zeitraum der Atmosphäre aussetzt, wobei sich die Patina-Schicht 8 erst ca. nach 10 Jahren ausbildet. Da jedoch eine derart lange Lagerzeit zum Aufbau der Patina-Schicht 8 nicht rentabel ist, werden die Teile einem künstlichen Alterungsprozess unterzogen, wodurch sich die Patina-Schicht 8 in kürzester Zeit ausbildet. Grundsätzlich besteht die Patina-Schicht 8 aus basischen Kupferverbindungen, insbesondere aus Kupfer-Carbonaten und/oder -Sulfaten, welche sich durch Reaktion von Kupfer mit Kohlen- und Schwefeldioxiden ausbilden. Die Patina-Schicht 8 hat die Eigenschaft, dass bei einer Anwendung der Teile bei einem Aluminium-Schweißprozess diese sich nicht mit dem Aluminium, also den Aluminium-Schweißspritzern 5, verbindet, so dass ein Einbrennen bzw. Anschmelzen der Schweißspritzer 5 an der Oberfläche verhindert wird und somit ein Versiegelungs-Schutz gegeben ist. Durch den Einsatz der Patina-Schicht 8 wird die Spritzerhaftung um einen Faktor 5 bis 10 reduziert, wodurch die Lebensdauer derartiger Teile, die mit der Patina-Schicht 8 versehen sind, wesentlich erhöht wird. Auch bringt die Ausbildung der Patina-Schicht 8 beim Reinigen der Teile wesentliche Vorteile, da sich die Schweißspritzer 8 nicht mehr in die Oberfläche der Teile einbrennen bzw. sich diese anschmelzen, so dass eine einfache Reinigung möglich ist, ohne dass dabei die Oberfläche der Teile zerstört wird.

Zum Erzeugen der Patina-Schicht 8 sind unterschiedliche Vorgehensweisen möglich. Nachstehend wird gemäß der Erfindung eine Lösung zur Erzeugung einer künstlichen Patina-Schicht 8 auf der Gasdüse 2 und/oder dem Düsenstock 3 und/oder dem Kontaktrohr 4 beschrieben. Die Kupferteile werden dabei aufeinanderfolgend in zwei Lösungen getaucht. Die erste Lösung besteht aus 1 Liter Wasser und 2ml Schwefelleber. Die zweite Lösung besteht wiederum aus 1 Liter Wasser, 1 bis 2g Kupfersulfat und 10ml Schwefelsäure. Die Kupferteile, an denen eine künstliche Patina-Schicht 8 erzeugt werden soll, werden nunmehr einige Sekunden in die erste Lösung eingetaucht. Anschließend werden die Kupferteile gespült und in die zweite Lösung getaucht. Dieser Vorgang wird mehrmals, insbesondere 2 bis 3 mal, wiederholt. Durch diesen Vorgang verfärbt sich der Kupferteil und bildet somit die Patina-Schicht 8 aus, wobei die Verfärbung bzw. die Patina-Schicht 8 sehr fest am Grundmaterial der Kupferteile, also an der Gasdüse 2, dem Düsenstock 3 und dem Kontaktrohr 4, haftet.

Je nachdem, wie oft der Vorgang wiederholt wird, umso dicker kann die Patina-Schicht 8 erzeugt werden. Bevorzugt weist die Patina-Schicht 8 eine Dicke zwischen 50 bis 200µm auf.

Die Patina-Schicht 8 ist zumindest an einem Teilbereich der Oberfläche der Gasdüse 2 vorgesehen, d.h., dass zumindest in jenem Bereich, der vor Schweißspritzern 5 geschützt werden soll, die Patina-Schicht 8 ausgebildet wird. Die Anwendung derartiger Gasdüsen 2 bzw. des Schweißbrenners 1 mit der Patina-Schicht 8 empfiehlt sich bei Aluminium-Schweißprozessen sowie beim MIG-Löten. Selbstverständlich ist es möglich, den Schweißbrenner 1 bzw. die Gasdüse 2 auch bei anderen Schweiß- oder Lötverfahren einzusetzen.

## Patentansprüche

1. Verfahren zur Erzeugung einer künstlichen Patinaoxid-Schicht (8) auf einer Gasdüse (2) und/oder dem Düsenstock (3) und/oder dem Kontaktrohr (4) eines Schweißbrenners (1), wobei diese Teile aus Kupfer bzw. einer Kupferlegierung bestehen, **dadurch gekennzeichnet, dass** der mit der Patinaoxid-Schicht (8) zu versehende Teil der Gasdüse (2) und/oder des Düsenstocks (3) und/oder des Kontaktrohres (4) in eine erste aus Wasser und 2 ml je Liter Wasser Schwefelleber bestehende Lösung eingetaucht wird, und nach einer Spülung mehrmals in eine zweite aus Wasser, 1 bis 2 g je Liter Wasser Kupfersulfat und 10 ml je Liter Wasser Schwefelsäure bestehende Lösung eingetaucht wird.

2. Verfahren nach Anspruch 1, **dadurch gekennzeichnet, dass** die gesamte Gasdüse (2) und/oder der gesamte Düsenstock (3) und/oder das gesamte Kontaktrohr (4) in die Lösungen eingetaucht wird.

3. Verfahren nach Anspruch 1 oder 2, **dadurch gekennzeichnet, dass** der mit der Patinaoxid-Schicht (8) zu versehende Teil der Gasdüse (2) und/oder des Düsenstocks (3) und/oder des Kontaktrohres (4) für einige Sekunden in die erste Lösung eingetaucht wird.

4. Verfahren nach einem der Ansprüche 1 bis 3, **dadurch gekennzeichnet, dass** der mit der Patinaoxid-Schicht (8) zu versehende Teil der Gasdüse (2) und/oder des Düsenstocks (3) und/oder des Kontaktrohres (4) nach der Spülung so oft in die zweite Lösung eingetaucht wird, bis die Dicke der Patinaoxid-Schicht 50µm bis 200 µm beträgt.

5. Verfahren nach Anspruch 4, **dadurch gekennzeichnet, dass** der mit der Patinaoxid-Schicht (8) zu versehende Teil der Gasdüse (2) und/oder des Düsenstocks (3) und/oder des Kontaktrohres (4) nach der Spülung zwei- bis dreimal in die zweite Lösung eingetaucht wird.

## Claims

1. A method for generating an artificial patina-oxide layer (8) on a gas nozzle (2) and/or on the nozzle assembly (3) and/or on the contact tube (4) of a welding torch (1), wherein these parts are made of copper and/or a copper alloy, **characterized in that that** part of the gas nozzle (2) and/or of the nozzle assembly (3) and/or of the contact tube (4) that is to be provided with the patina-oxide layer (8) is immersed into a first solution, which consists of water and 2 ml of liver of sulfur per liter of water, and after a rinsing process, the same is several times immersed into a second solution, which consists of water, 1 to 2 g of copper sulfate per liter of water and 10 ml of sulfuric acid per liter of water.

2. The method according to claim 1, **characterized in that** the whole gas nozzle (2) and/or the whole nozzle assembly (3) and/or the whole contact tube (4) is immersed into the solutions.

3. The method according to claim 1 or 2, **characterized in that that** part of the gas nozzle (2) and/or of the nozzle assembly (3) and/or of the contact tube (4) that is to be provided with the patina-oxide layer (8) is immersed into the first solution for several seconds.

4. The method according to any one of claims 1 to 3, **characterized in that** after the rinsing process, that part of the gas nozzle (2) and/or of the nozzle assembly (3) and/or of the contact tube (4) that is to be provided with the patina-oxide layer (8) is immersed into the second solution as often as required to obtain a thickness of the patina-oxide layer which is from 50 µm to 200 µm.

5. The method according to claim 4, **characterized in that** after the rinsing process, that part of the gas nozzle (2) and/or of the nozzle assembly (3) and/or of the contact tube (4) that is to be provided with the patina-oxide layer (8) is immersed into the second solution two to three times.

## Revendications

1. Procédé de production d'une couche artificielle d'oxyde de type patine (8) sur une buse à gaz (2) et/ou sur le porte-injecteur (3) et/ou sur le tube de contact (4) d'un chalumeau (1), dans lequel ces pièces sont constituées de cuivre ou d'un alliage à base de cuivre, **caractérisé en ce que** la partie de la buse à gaz (2) et/ou du porte-injecteur (3) et/ou du tube de contact (4) qui est à revêtir par la couche d'oxyde de patine (8) est immergée dans une première solution constituée d'eau et de 2 ml de foie de soufre par litre d'eau et, après un rinçage, est immergée plusieurs fois dans une seconde solution constituée d'eau, de 1 à 2 g de sulfate de cuivre par litre d'eau et de 10 ml d'acide sulfurique par litre d'eau.

2. Procédé selon la revendication 1, **caractérisé en ce que** l'on immerge l'ensemble de la buse à gaz (2) et/ou du porte-injecteur (3) et/ou du tube de contact (4) dans les solutions.

3. Procédé selon la revendication 1 ou 2, **caractérisé en ce que** la partie à revêtir avec la couche d'oxyde de patine (8) de la buse à gaz (2) et/ou du porte-injecteur (3) et/ou du tube de contact (4) est immergée pendant quelques secondes dans la première solution.

4. Procédé selon l'une quelconque des revendications 1 à 3, **caractérisé en ce que** la partie de la buse à gaz (2) et/ou du porte-injecteur (3) et/ou du tube de contact qui est à revêtir avec la couche d'oxyde de patine (8) est immergée, après le rinçage, dans la seconde solution autant de fois qu'il est nécessaire pour que l'épaisseur de la couche d'oxyde de patine se situe dans la plage de 50 µm à 200 µm.

5. Procédé selon la revendication 4, **caractérisé en ce que** la partie à revêtir de la couche d'oxyde de patine (8) de la buse à gaz (2) et/ou du porte-injecteur et/ou du tube de contact (4) est immergée, après le rinçage, deux à trois fois dans la seconde solution.
